# EUROPEAN PATENT APPLICATION

(11) **EP 2 921 954 A1**
(43) Date of publication of application: **23.09.2015**
(21) Application number: 13862937.3
(22) Date of filing: 30.07.2013
(51) Int. Cl.: G06F 9/455

(54) **VIRTUAL MACHINE ALLOCATION METHOD AND APPARATUS**

(30) Priority: 11.12.2012 CN 201210532071
(71) Applicant: Huawei Technologies Co., Ltd., Longgang District Shenzhen, Guangdong 518129 (CN)
(72) Inventor: WANG, Hua, Shenzhen Guangdong 518129 (CN)
(74) Representative: Thun, Clemens
(86) International application number: PCT/CN2013/080373
(87) International publication number: WO 2014/089976

(57) **Abstract**

Embodiments of the present invention provide a method and an apparatus for allocating a virtual machine. The method includes: acquiring configuration information of application software, where the configuration information includes multiple virtual machine types available for the application software and priorities of the virtual machine types; and preferentially allocating a virtual machine corresponding to a virtual machine type with a high priority to the application software according to the priorities of the virtual machine types in the configuration information, so that the application software runs on the virtual machine. According to the technical solutions provided by the embodiments of the present invention, a virtual machine corresponding to a virtual machine type with a high priority can be preferentially allocated to application software based on priorities of virtual machine types available for the application software in configuration information of the application software, thereby improving the running effect of the application software.

## Description

This application claims priority to Chinese Patent Application No. 201210532071.7, filed with the Chinese Patent Office on December 11, 2012 and entitled "METHOD AND APPARATUS FOR ALLOCATING A VIRTUAL MACHINE ", which is incorporated herein by reference in its entirety.

### TECHNICAL FIELD

Embodiments of the present invention relate to computer technologies, and in particular, to a method and an apparatus for allocating a virtual machine.

### BACKGROUND

The development of computer technologies has resulted in increasingly wide use of virtualization systems such as cloud computing systems. Multiple types of hardware are generally included in a virtualization system, and each type of hardware can provide different types of virtual machines, so that application software can run on the virtual machines provided by the hardware.

At present, before application software running based on a virtualization system is deployed, a virtual machine type available for the application software is defined for the application software. In this way, when the application software is in use, the virtual machine system allocates one virtual machine meeting a requirement of the application software to the application software according to the virtual machine type available for the application software, so that the application software can run on the virtual machine. When allocating a virtual machine to application software, the virtualization system allocates one virtual machine to the application software randomly or according to a uniform rule by taking current usage of hardware resources into consideration.

However, in the prior art, when a virtualization system allocates a virtual machine to application software, it is possible that the virtual machine allocated to the application software cannot meet a need of the application software, thereby adversely affecting the running of the application software on the virtual machine allocated by the system.

### SUMMARY

Embodiments of the present invention provide a method and apparatus for allocating a virtual machine, which can overcome a problem in the prior art in which a virtualization system allocates a virtual machine to application software.

According to a first aspect, an embodiment of the present invention provides a method for allocating a virtual machine, including:
acquiring configuration information of application software, where the configuration information includes multiple virtual machine types available for the application software and priorities of the virtual machine types; and
preferentially allocating a virtual machine corresponding to a virtual machine type with a high priority to the application software according to the priorities of the virtual machine types in the configuration information, so that the application software runs on the virtual machine.

With reference to the first aspect, in a first possible implementation, the priorities of the virtual machine types include a high priority and a low priority.

With reference to the first aspect, in a second possible implementation, the priorities of the virtual machine types include priorities of multiple priority levels.

With reference to the first aspect, or the first or second possible implementation of the first aspect, in a third possible implementation, the preferentially allocating a virtual machine corresponding to a virtual machine type with a high priority to the application software according to the priorities of the virtual machine types in the configuration information includes:
determining whether the virtual machine corresponding to the virtual machine type with a high priority in the configuration information can be allocated;
when the virtual machine corresponding to the virtual machine type with a high priority can be allocated, allocating the virtual machine corresponding to the virtual machine type with a high priority to the application software; and
when the virtual machine corresponding to the virtual machine type with a high priority cannot be allocated, allocating a virtual machine, which is among at least one virtual machine type that has a lower priority than the virtual machine type with a high priority, to the application software in high to low priority order.

With reference to the first aspect, or the first or second possible implementation of the first aspect, in a fourth possible implementation, the configuration information specifically includes multiple configuration sub-information, and each configuration sub-information includes multiple virtual machine types available for the application software and priorities of the virtual machine types; and
the preferentially allocating a virtual machine corresponding to a virtual machine type with a high priority to the application software according to the priorities of the virtual machine types in the configuration information includes:
preferentially allocating a virtual machine corresponding to a virtual machine type with a high priority in each configuration sub-information to the application software according to the priorities of the virtual machine types in the configuration sub-information.

According to a second aspect, an embodiment of the present invention provides an apparatus for allocating a virtual machine, including:
a configuration information acquiring module, configured to acquire configuration information of application software, where the configuration information includes multiple virtual machine types available for the application software and priorities of the virtual machine types; and
a virtual machine allocating module, configured to preferentially allocate a virtual machine corresponding to a virtual machine type with a high priority to the application software according to the priorities of the virtual machine types in the configuration information, so that the application software runs on the virtual machine.

With reference to the second aspect, in a first possible implementation, the priorities of the virtual machine types include a high priority and a low priority.

With reference to the second aspect, in a second possible implementation, the priorities of the virtual machine types include priorities of multiple priority levels.

With reference to the second aspect, or the first or second possible implementation of the second aspect, in a third possible implementation, the virtual machine allocating module includes:
a determining unit, configured to determine whether the virtual machine corresponding to the virtual machine type with a high priority in the configuration information can be allocated;
a first allocating unit, configured to: when the virtual machine corresponding to the virtual machine type with a high priority can be allocated, allocate the virtual machine corresponding to the virtual machine type with a high priority to the application software; and
a second allocating unit, configured to: when the virtual machine corresponding to the virtual machine type with a high priority cannot be allocated, allocate a virtual machine, which is among at least one virtual machine type that has a lower priority than the virtual machine type with a high priority, to the application software in high to low priority order.

With reference to the second aspect, or the first or second possible implementation of the second aspect, in a fourth possible implementation, the configuration information specifically includes multiple configuration sub-information, and each configuration sub-information includes multiple virtual machine types available for the application software and priorities of the virtual machine types; and
the virtual machine allocating module is specifically configured to preferentially allocate a virtual machine corresponding to a virtual machine type with a high priority in each configuration sub-information to the application software according to the priorities of the virtual machine types in the configuration sub-information.

In the embodiments of the present invention, a virtual machine corresponding to a virtual machine type with a high priority can be preferentially allocated to application software according to priorities of virtual machine types available for the application software in configuration information of the application software. In this way, a virtual machine can be allocated to application software according to a need of the application software, thereby enabling the application software to run better running on the allocated virtual machine.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for allocating a virtual machine according to Embodiment 1 of the present invention;
FIG. 2 is a schematic flowchart of a method for allocating a virtual machine according to Embodiment 2 of the present invention;
FIG. 3 is a schematic flowchart of a method for allocating a virtual machine according to Embodiment 3 of the present invention;
FIG. 4 is a schematic diagram of a configuration structure of a virtualization system according to Embodiment 4 of the present invention;
FIG. 5 is a schematic structural diagram of an apparatus for allocating a virtual machine according to Embodiment 5 of the present invention;
FIG. 6 is a schematic structural diagram of an apparatus for allocating a virtual machine according to Embodiment 6 of the present invention; and
FIG. 7 is a schematic structural diagram of a virtual machine allocating module according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

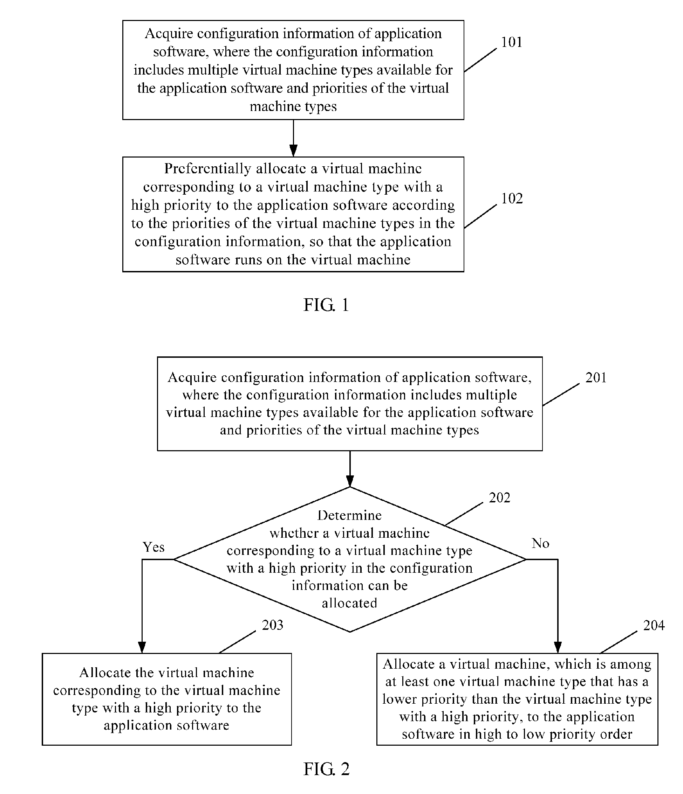

FIG. 1 is a schematic flowchart of a method for allocating a virtual machine according to Embodiment 1 of the present invention. This embodiment may be applied to a virtualization system to allocate a virtual machine to application software deployed in the virtualization system. Specifically, as shown in FIG. 1, the method provided by this embodiment may include the following steps:
Step 101: Acquire configuration information of application software, where the configuration information includes multiple virtual machine types available for the application software and priorities of the virtual machine types.
Step 102: Preferentially allocate a virtual machine corresponding to a virtual machine type with a high priority to the application software according to the priorities of the virtual machine types in the configuration information, so that the application software runs on the virtual machine.

In this embodiment, the virtualization system has multiple types of hardware resources and each type of hardware resource can support different virtual machines. The virtual machine type refers to a type of hardware resource or a type of virtual machine. Specifically, the virtual machine type may refer to hardware resource configuration information, or may refer to a virtual machine. The virtualization system can determine a corresponding hardware resource according to the virtual machine type and deploy a corresponding virtual machine on the hardware resource, so that the application software can run on the virtual machine.

A person of skill in the art may understand that the configuration information is information that is preset by a user for the application software, and the configuration information may be modified by the user according to a need. In an actual application, the configuration information may be saved as a configuration file, or may be stored in a specific database. In addition, when the application software needs to be deployed, the configuration information may be uploaded to the virtualization system, and the virtualization system generally allocates, according to the foregoing steps, a virtual machine to the application software to use.

In this embodiment, the priorities of the virtual machine types available for the application software in the allocation information specifically refer to priorities of available virtual machine types set for the application software according to a preference of the application software. For example, in the event that the application software is CPU-intensive, the application software may be set to preferentially use a virtual machine type with a strong CPU processing capability and a relatively small memory and hard disk configuration, that is, in the configuration information of the application software, a virtual machine type with a strong CPU processing capability and a relatively small memory and hard disk configuration is assigned a high priority; in the event that the application software is memory hungry, the application software may be set to preferentially use a virtual machine type with a large memory configuration, a relatively low CPU processing capability and a relatively small hard disk configuration, that is, in the configuration information of the application software, a virtual machine type with a large memory configuration, a relatively low CPU processing capability and a relatively small hard disk configuration is assigned a high priority. A person of skill in the art may understand that, the application software can deliver a better performance when running on a virtual machine corresponding to a virtual machine type with a high priority.

According to the method for allocating a virtual machine provided by this embodiment, a virtual machine corresponding to a virtual machine type with a high priority can be preferentially allocated to application software according to priorities of virtual machine types of the application software in configuration information of the application software. In this way, a virtual machine can be allocated to application software according to a need of the application software, thereby enabling the application software to run better on the allocated virtual machine.

FIG. 2 is a schematic flowchart of a method for allocating a virtual machine according to Embodiment 2 of the present invention. As shown in FIG. 2, the method provided by this embodiment may include the following steps:
Step 201: Acquire configuration information of application software, where the configuration information includes multiple virtual machine types available for the application software and priorities of the virtual machine types.
Step 202: Determine whether a virtual machine corresponding to a virtual machine type with a high priority in the configuration information can be allocated; if the virtual machine corresponding to the virtual machine type with a high priority can be allocated, step 203 is executed; or if no, step 204 is executed.
Step 203: Allocate the virtual machine corresponding to the virtual machine type with a high priority to the application software.
Step 204: Allocate a virtual machine, which is among at least one virtual machine type that has a lower priority than the virtual machine type with a high priority, to the application software in high to low priority order.

In this embodiment, the priorities of the virtual machine types may specifically include two priority levels: a high priority and a low priority; or the priorities of the virtual machine types may refer to priorities with multiple priority levels, which may be indicated by numbers, for example, numbers 0 to 6 are used to indicate priorities, where 0 indicates a lowest priority and 6 indicates a highest priority.

In the foregoing step 202, when the virtual machine corresponding to the virtual machine type with a high priority in the configuration information of the application software cannot be allocated, that is, when a hardware resource corresponding to the virtual machine in a virtualization system is insufficient, a corresponding virtual machine among at least one virtual machine type with a low priority can be allocated to the application software. A person of skill in the art may understand that, when multiple virtual machine types have a same priority and when one of the multiple virtual machines needs to be allocated to the application software, a traditional method for allocating a virtual machine may be used to allocate a virtual machine to the application software. For example, a virtual machine is allocated to the application software randomly or according to a uniform rule by taking hardware resource usage of the virtualization system into consideration.

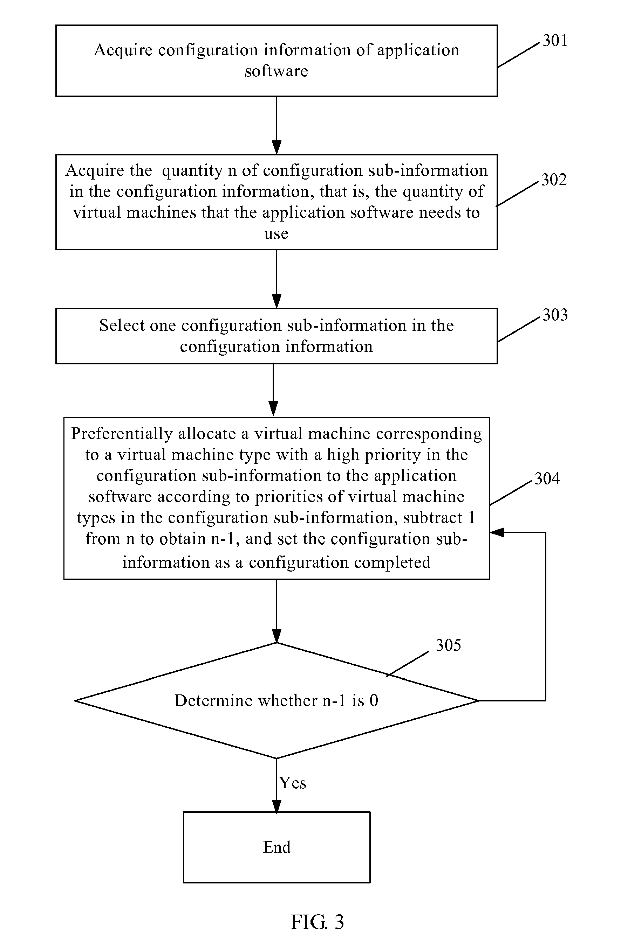

FIG. 3 is a schematic flowchart of a method for allocating a virtual machine according to Embodiment 3 of the present invention. In this embodiment, the foregoing configuration information may include multiple configuration sub-information, and each configuration sub-information includes multiple virtual machine types available for application software and priorities of the virtual machine types. In this way, a virtualization system can preferentially allocate a virtual machine corresponding to a virtual machine type with a high priority in each configuration sub-information to the application software according to the priorities of the virtual machine types in the configuration sub-information. Specifically, as shown in FIG. 3, the method provided by this embodiment may include the following steps:
Step 301: Acquire configuration information of application software.
Step 302: Acquire the quantity n of configuration sub-information in the configuration information, that is, the quantity of virtual machines that the application software needs to use.
Step 303: Select one configuration sub-information in the configuration information.
Step 304: Preferentially allocate a virtual machine corresponding to a virtual machine type with a high priority in the configuration sub-information to the application software according to priorities of virtual machine types in the configuration sub-information, subtract 1 from n to obtain n-1, and set the configuration sub-information as a configuration completed.
Step 305: Determine whether n-1 is 0; if n-1 is 0, the process ends; and if n-1 is not 0, select, in the configuration information, another configuration sub-information for which a configuration is not completed and continue to execute step 304.

In this embodiment, the application software needs to run on multiple virtual machines at the same time. Therefore, multiple configuration sub-information may be set in the configuration information to indicate that the application software requires a virtualization system to allocate multiple virtual machines to the application software. In this way, when allocating a virtual machine to the application software, the virtualization system may allocate the virtual machines to the application software based on the virtual machine types in each configuration sub-information.

This embodiment may be applied to virtual machine allocation for application software that needs to run on multiple virtual machines, and the configuration information may also include the quantity of virtual machines that the application software needs to use.

To facilitate a better understanding of the technical solutions provided by the embodiments of the present invention, the following provides description by using a specific application scenario as an example.

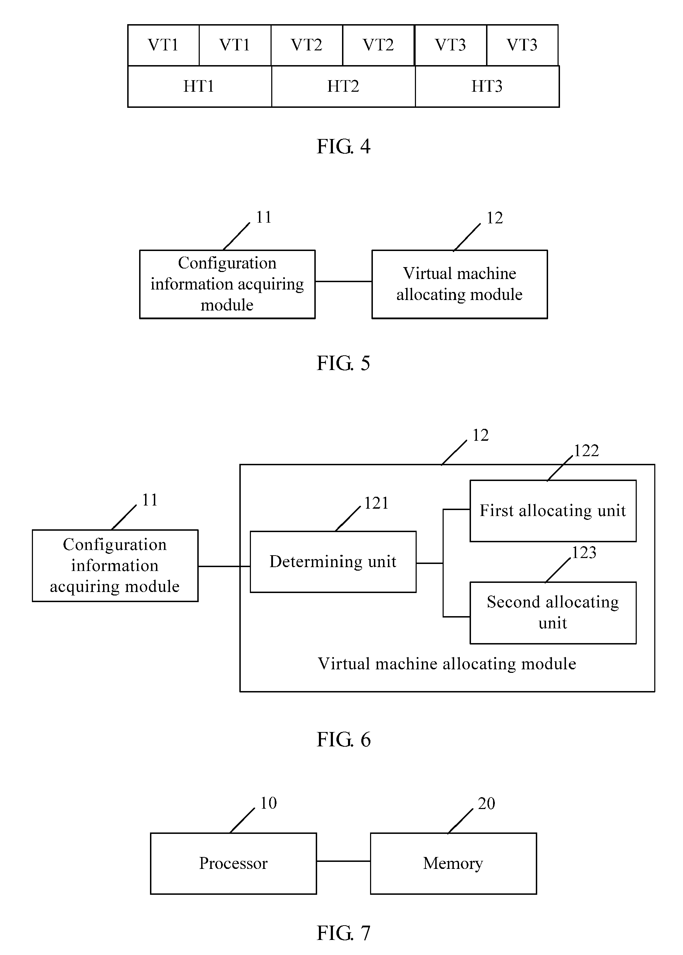

FIG. 4 is a schematic diagram illustrating a configuration structure of a virtualization system applied in a method for allocating a virtual machine according to Embodiment 4 of the present invention. As shown in FIG. 4, the virtualization system includes three types of hardware resources: an HT1, an HT2, and an HT3. The HT1 can provide a virtual machine VT1, the HT2 can provide a virtual machine VT2, and the HT3 can provide a virtual machine VT3. In addition, the VT1, the VT2, and the VT3 are all configured with a required hardware resource such as a CPU, memory, and a hard disk capacity. For example, a hardware resource configuration of the VT1 may be as follows: CPU=1.5GHz, memory is 8G, and a hard disk capacity is 100GB. Hardware resources of all types of virtual machines are the same, and one or more virtual machines of a same type can run on each hardware resource. In this embodiment, when application software APP1 is deployed in the virtualization system, a configuration information file may be set for the APP1. Specifically, the configuration information file may be an open virtualization format (Open Virtualization Format, OVF) file. The OVF file is a file that describes relevant information of virtual machines available for application software, for example, the OVF file may describe information such as specifications, quantity, and deployment manners of virtual machines required by the application software. The OVF file may be uploaded to the virtualization system by a user.

Specifically, virtual machine types available for the APP1 may be defined in a virtual machine system (VirtualSystem) in the OVF file. In addition, a priority of each virtual machine type available for the APP1 is added in the VirtualSystem. For example, a default parameter Default may be added in the VirtualSystem. When the Default of a virtual machine type is true, that is, Default=True, it indicates that the defined virtual machine type has a high priority; and when the Default of a virtual machine type is false, that is, Default=false, or when no Default parameter is present, it indicates that the defined virtual machine type has a low priority. The VirtualSystem is a function in the OVF file and is used for defining virtual machine types available for application software, and a virtual machine type available for application software is defined by a virtual machine type defining function (VirtualHardwareSection) in the VirtualSystem. Each VirtualHardwareSection may define one virtual machine type. Each VirtualSystem generally includes multiple VirtualHardwareSections and the parameter Default is also set in the VirtualHardwareSection. It is assumed that, in the OVF file set by the user for the APP1, virtual machines that can be allocated to the APP1 by using the virtual machine type defining function are the VT1, the VT2, and the VT3, and the VT1 has a high priority, and the VT2 and the VT3 have a low priority. When the virtualization system obtains the OVF file of the APP1, it can be learnt, by parsing the OVF file, that virtual machine types available for the APP1 are the VT1, the VT2, and the VT3. Afterwards, it is determined whether there is an idle VT1 for the APP1 to use in the virtualization system. If there is an idle VT1 for the APP1 to use in the virtualization system, the VT1 is preferentially allocated to the APP1; and if there is no idle VT1 for the APP1 to use in the virtualization system, the VT2 or the VT3 is allocated to the APP1 according to resource occupation states of the VT2 and the VT3.

In an actual application, if the APP1 needs to run on multiple virtual machines, the quantity of virtual machines to be used by the APP1 may be defined by a virtual machine collection (VirtualSystemCollection) function in the OVF file, and virtual machine types available for the APP1 may be defined by the VirtualSystem, where the number of VirtualSystems is the same as the number of virtual machines. The VirtualSystemCollection is a virtual machine function in the OVF file and used for defining use of multiple virtual machines, and the VirtualSystemCollection may include multiple VirtualSystems. For example, it is assumed that the APP1 needs to use two virtual machines. Therefore, virtual machine types available for the APP1 are defined in the OVF file by using two VirtualSystems. In addition, virtual machines available for the APP1, namely, the VT1, the VT2, and the VT3, are defined in one VirtualSystem, where the VT1 has a high priority; and virtual machines available for the APP1, namely, the VT1, the VT2, and the VT3, are defined in the other VirtualSystem, where the VT2 has a high priority. In this way, when the virtualization system obtains the OVF file of the APP1, the VT1 and the VT2 may be preferentially allocated to the APP1.

A person of skill in the art may understand that, in an actual application, a Priority parameter may also be set in the OVF file to indicate a priority of a virtual machine type. A value of the Priority parameter is an integer greater than or equal to 0, for example, the value may be within the range 0-6. When the value of Priority is 0, it indicates that a priority of a corresponding virtual machine type is the lowest; and when the value of Priority is 6, it indicates that a priority of a corresponding virtual machine type is the highest. In this way, the virtualization system may also define a priority of a virtual machine type available for the APP1 according to the Priority parameter, and preferentially allocate a virtual machine corresponding to a virtual machine type with a high priority to the APP1 according to the priorities.

FIG. 5 is a schematic structural diagram of an apparatus for allocating a virtual machine according to Embodiment 5 of the present invention. As shown in FIG. 5, the apparatus provided by this embodiment may include a configuration information acquiring module 11 and a virtual machine allocating module 12, where:
the configuration information acquiring module 11 is configured to acquire configuration information of application software, where the configuration information includes multiple virtual machine types available for the application software and priorities of the virtual machine types; and
the virtual machine allocating module 12 is configured to preferentially allocate a virtual machine corresponding to a virtual machine type with a high priority to the application software according to the priorities of the virtual machine types in the configuration information, so that the application software runs on the virtual machine.

The apparatus provided by this embodiment may be applied to a virtualization system and used for allocating a virtual machine to application software. For specific implementation of the apparatus, reference may be made to the descriptions of the foregoing method embodiments of the present invention, and details are not described herein again.

FIG. 6 is a schematic structural diagram of an apparatus for allocating a virtual machine according to Embodiment 6 of the present invention. Based on the foregoing technical solution shown in FIG. 5, as shown in FIG. 6, the foregoing virtual machine allocating module 12 may specifically include a determining unit 121, a first allocating unit 122, and a second allocating unit 123, where:
the determining unit 121 is configured to determine whether the virtual machine corresponding to the virtual machine type with a high priority in the configuration information can be allocated;
the first allocating unit 122 is configured to: when the virtual machine corresponding to the virtual machine type with a high priority can be allocated, allocate the virtual machine corresponding to the virtual machine type with a high priority to the application software; and
the second allocating unit 123 is configured to: when the virtual machine corresponding to the virtual machine type with a high priority cannot be allocated, allocate a virtual machine, which is among at least one virtual machine type that has a lower priority than the virtual machine type with a high priority, to the application software in high to low priority order.

In this embodiment, the priorities of the virtual machine types may specifically include a high priority and a low priority; or the priorities of the virtual machine types may also include priorities of multiple priority levels.

In the foregoing embodiment shown in FIG. 5, the configuration information may specifically include multiple configuration sub-information, and each configuration sub-information includes multiple virtual machine types available for the application software and priorities of the virtual machine types. The foregoing virtual machine allocating module 12 can be specifically configured to preferentially allocate a virtual machine corresponding to a virtual machine type with a high priority in each configuration sub-information to the application software according to the priorities of the virtual machine types in the configuration sub-information. The apparatus may be applied to virtual machine allocation for application software requiring multiple virtual machines. For specific implementation of the apparatus, reference may be made to the description of the foregoing Method Embodiment 3 or 4 of the present invention.

FIG. 7 is a schematic structural diagram of a virtual machine allocating module according to Embodiment 7 of the present invention. As shown in FIG. 7, the virtual machine allocating module provided by this embodiment includes a processor 10 and a memory 20. The processor 10 may be connected to the memory 20 by using a bus. The memory 20 can be configured to store an instruction, and the processor 10 is configured to execute the instruction to execute a relevant operation. Specifically, the processor 10 can execute the instruction stored by the memory 20 to acquire configuration information of application software, where the configuration information includes multiple virtual machine types available for the application software and priorities of the virtual machine types. The processor 10 is configured to preferentially allocate a virtual machine corresponding to a virtual machine type with a high priority to the application software according to the priorities of the virtual machine types in the configuration information, so that the application software runs on the virtual machine. The configuration information of the application software may be stored in the memory 20. The priorities of the virtual machine types include a high priority and a low priority; or the priorities of the virtual machine types may also include priorities of multiple priority levels.

In this embodiment, the processor 10 can be specifically configured to: determine whether the virtual machine corresponding to the virtual machine type with a high priority in the configuration information can be allocated; when the virtual machine corresponding to the virtual machine type with a high priority can be allocated, allocate the virtual machine corresponding to the virtual machine type with a high priority to the application software; when the virtual machine corresponding to the virtual machine type with a high priority cannot be allocated, allocate a virtual machine, which is among at least one virtual machine type that has a lower priority than the virtual machine type with a high priority, to the application software in high to low priority order.

In this embodiment, the foregoing configuration information may specifically include multiple configuration sub-information, and each configuration sub-information includes multiple virtual machine types available for the application software and priorities of the virtual machine types. The foregoing processor 10 can be specifically configured to preferentially allocate a virtual machine corresponding to a virtual machine type with a high priority in configuration sub-information to the application software according to the priorities of the virtual machine types in the configuration sub-information.

In the virtual machine allocating module provided by this embodiment, the processor 10 can implement functions of the foregoing functional modules shown in FIG. 5 or FIG. 6 by executing an instruction stored in the memory 20. For specific implementation of the virtual machine allocating module, reference may be made to the descriptions of the foregoing method embodiments of the present invention, and details are not described herein again.

Based on the foregoing descriptions of the embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The computer-readable medium, by way of example and not by way of restriction, may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

It should be noted that the embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for execution processes of specific functions of each unit, reference may be made to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. A part or all of the modules may be selected according to actual needs to achieve the objectives of the solutions of the embodiments. A person of ordinary skill in the art may understand and implement the embodiments of the present invention without creative efforts.

The foregoing are merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A method for allocating a virtual machine, comprising:
acquiring configuration information of application software, wherein the configuration information comprises multiple virtual machine types available for the application software and priorities of the virtual machine types; and
preferentially allocating a virtual machine corresponding to a virtual machine type with a high priority to the application software according to the priorities of the virtual machine types in the configuration information, so that the application software runs on the virtual machine.

2. The method according to claim 1, wherein the priorities of the virtual machine types comprise a high priority and a low priority.

3. The method according to claim 1, wherein the priorities of the virtual machine types comprise priorities of multiple priority levels.

4. The method according to any one of claims 1 to 3, wherein the preferentially allocating a virtual machine corresponding to a virtual machine type with a high priority to the application software according to the priorities of the virtual machine types in the configuration information comprises:
determining whether the virtual machine corresponding to the virtual machine type with a high priority in the configuration information can be allocated;
when the virtual machine corresponding to the virtual machine type with a high priority can be allocated, allocating the virtual machine corresponding to the virtual machine type with a high priority to the application software; and
when the virtual machine corresponding to the virtual machine type with a high priority cannot be allocated, allocating a virtual machine, which is among at least one virtual machine type that has a lower priority than the virtual machine type with a high priority, to the application software in high to low priority order.

5. The method according to any one of claims 1 to 3, wherein the configuration information specifically comprises multiple configuration sub-information, and each configuration sub-information comprises multiple virtual machine types available for the application software and priorities of the virtual machine types; and
the preferentially allocating a virtual machine corresponding to a virtual machine type with a high priority to the application software according to the priorities of the virtual machine types in the configuration information comprises:
preferentially allocating a virtual machine corresponding to a virtual machine type with a high priority in each configuration sub-information to the application software according to the priorities of the virtual machine types in the configuration sub-information.

6. An apparatus for allocating a virtual machine, comprising:
a configuration information acquiring module, configured to acquire configuration information of application software, wherein the configuration information comprises multiple virtual machine types available for the application software and priorities of the virtual machine types; and
a virtual machine allocating module, configured to preferentially allocate a virtual machine corresponding to a virtual machine type with a high priority to the application software according to the priorities of the virtual machine types in the configuration information, so that the application software runs on the virtual machine.

7. The apparatus according to claim 6, wherein the priorities of the virtual machine types comprise a high priority and a low priority.

8. The apparatus according to claim 6, wherein the priorities of the virtual machine types comprise priorities of multiple priority levels.

9. The apparatus according to any one of claims 6 to 8, wherein the virtual machine allocating module comprises:
a determining unit, configured to determine whether the virtual machine corresponding to the virtual machine type with a high priority in the configuration information can be allocated;
a first allocating unit, configured to: when the virtual machine corresponding to the virtual machine type with a high priority can be allocated, allocate the virtual machine corresponding to the virtual machine type with a high priority to the application software; and
a second allocating unit, configured to: when the virtual machine corresponding to the virtual machine type with a high priority cannot be allocated, allocate a virtual machine, which is among at least one virtual machine type that has a lower priority than the virtual machine type with a high priority, to the application software in high to low priority order.

10. The apparatus according to any one of claims 6 to 8, wherein the configuration information specifically comprises multiple configuration sub-information, and each configuration sub-information comprises multiple virtual machine types available for the application software and priorities of the virtual machine types; and
the virtual machine allocating module is specifically configured to preferentially allocate a virtual machine corresponding to a virtual machine type with a high priority in each configuration sub-information to the application software according to the priorities of the virtual machine types in the configuration sub-information.
